Europäisches Patentamt

European Patent Office

Office européen des brevets

(19)

(11) Veröffentlichungsnummer: **0 287 141 B1**

# EUROPÄISCHE PATENTSCHRIFT

(12)

(45) Veröffentlichungstag der Patentschrift:
15.05.91 Patentblatt 91/20

(51) Int. Cl.$^5$: **C05C 3/00, C05D 1/00,**
**C05D 9/00**

(21) Anmeldenummer: **88200471.6**

(22) Anmeldetag: **14.03.88**

(54) **Verfahren zur Trocknung von feuchten, granulierten, ammonium- oder alkalihaltigen Düngern.**

(30) Priorität: **15.04.87 DE 3712724**

(43) Veröffentlichungstag der Anmeldung:
**19.10.88 Patentblatt 88/42**

(45) Bekanntmachung des Hinweises auf die
Patenterteilung:
**15.05.91 Patentblatt 91/20**

(84) Benannte Vertragsstaaten:
**BE DE ES FR NL**

(56) Entgegenhaltungen:
**EP-A- 0 101 110**
**DE-A- 1 669 313**
**DE-A- 2 255 029**
**DE-A- 2 905 083**
**DE-B- 2 143 444**
**DE-C- 425 335**
**DE-C- 571 494**
**FR-A- 1 338 527**

(56) Entgegenhaltungen:
**FR-A- 1 574 030**
**FR-A- 2 040 400**
**US-A- 4 052 794**
**INDUSTRIAL AND ENGINEERING CHEMI-**
**STRY, Band 49, Nr. 3, März 1957, Seiten**
**392-395, American Chemical Society, Colum-**
**bus, Ohio, US; G. TARBUTTON et al.:**
**"Recovery of sulfur dioxide from flue gases"**

(73) Patentinhaber: **METALLGESELLSCHAFT AG**
**Reuterweg 14 Postfach 3724**
**W-6000 Frankfurt/M.1 (DE)**

(72) Erfinder: **Bauch, Günter, Dr.**
**Taunushöhe 21 a**
**W-6233 Kelkheim (DE)**
Erfinder: **Dörr, Karl-Heinz**
**Am Gonsenheimer Spiess 6**
**W-6500 Mainz (DE)**
Erfinder: **Sander, Ulrich, Dr.**
**Taunusstrasse 116**
**W-6382 Friedrichsdorf (DE)**

## Beschreibung

Die Erfindung betrifft ein Verfahren zur Trocknung von feuchten, granulierten, ammonium- oder alkalihaltigen Düngern mittels Gasen.

Ammonium- oder alkalihaltige Komplex-Dünger müssen nach bzw. während der Granulation getrocknet werden. Die Herstellung erfolgt im allgemeinen durch Zusammenführung von Säuren, wie $H_3PO_4$ und $H_2SO_4$ verschiedenster Konzentrationen, mit alkalischen Komponenten, wie $NH_3$ in gasförmiger, flüssiger oder gelöster Form, oder Ammonium und Alkaliverbindungen in fester oder gelöster Form. Wenn die Neutralisationsreaktion unter atmosphärischem Druck erfolgt, wird in verdünnten Lösungen gearbeitet. Dabei fällt eine Maische mit relativ hohem Wassergehalt an, die mit feinem Rückgut granuliert werden muß. Wenn die Neutralisation unter Druck erfolgt, können konzentrierte Säuren und Ammoniak eingesetzt werden. Dabei fallen Salzschmelzen mit geringerem Wassergehalt und höherer Temperatur, von mehr als 100°C, an. Diese Neutralisation kann entweder in gerührten Druckreaktoren oder in sogenannten T-Rohrreaktoren oder Pipe-cross-Reaktoren erfolgen. Die Salzschmelze wird entweder in einem Trockenturm geprillt und nach Vermischen mit feinem Rückgut und Wasser granuliert oder die Salzschmelze wird direkt in den Granulator eingedüst. Als Granulatoren werden im allgemeinen Drehrohre eingesetzt, bei denen die Materialaufgabe im Gleichstrom mit atmosphärischer Luft erfolgt. Das im Granulator verdampfende Wasser wird mittels des Luftstromes ausgetragen. Der Luftstrom wird im allgemeinen einem Gaswäscher zugeführt, in dem eine Abscheidung der gasförmigen Bestandteile, insbesondere von Ammoniak, sowie von staubförmigen Bestandteilen erfolgt. Im Granulator erfolgt häufig eine Zugabe von Ammoniak, um durch die freiwerdende Neutralisationswärme die Verdampfung von Wasser sowie die Granulierung zu fördern. Als Granulator können auch Wirbelschichtapparate eingesetzt werden, in deren Bett sowohl Salzschmelze als auch Maische eingetragen werden können.

Zur Einstellung des erforderlichen Wassergehaltes werden die Granulate anschließend getrocknet. Die Trocknung erfolgt im allgemeinen in Drehrohren mittels heißer Rauchgase, die durch Verbrennung fossiler Brennstoffe mit atmosphärischer Luft erzeugt werden und denen zur Einstellung der zulässigen Temperatur atmosphärische Luft zugemischt wird. Zur Vermeidung von Überhitzung der Granulate erfolgt die Zuführung der Rauchgase in den meisten Fällen im Gleichstrom mit der Aufgabe des feuchten Granulates. Dabei müssen zur Erzielung einer guten Trocknung relativ große Gasmengen eingesetzt werden, und trotzdem ist die Erzielung eines sehr niedrigen Rest-Feuchtegehaltes nicht möglich, da das Gas am Austritt des Trockners den höchsten Wassergehalt hat. Bei einer Trocknung im Gegenstrom wird zwar ein niedriger Rest-Feuchtegehalt erzielt, es tritt aber das Problem der Überhitzung des Granulates auf, da das Granulat mit dem geringsten Feuchtegehalt mit dem heißesten Gas in Berührung kommt. Die Trocknung kann auch im Granulator – zumindest teilweise – erfolgen, wenn das Aufgabematerial im wesentlichen aus einer heißen Salzschmelze besteht. Durch die hohe Temperatur wird Wasser verdampft. Zur Beschleunigung der Verdampfung wird atmosphärische Luft im Gleichstrom durch den Granulator geleitet, Voraussetzung für die Herstellung einer Salzschmelze mit möglichst geringem Wassergehalt ist der Einsatz von möglichst hochkonzentrierten Säuren bei der Neutralisation mit Ammoniak und eine möglichst niedrige Rate an rückgeführtem Feingut. Die aus dem Granulator austretenden feuchten Gase werden zur Abscheidung von Ammoniak und Staub durch einen Gawäscher geleitet (Winnacker - Kuechler, 4. Auflage, Band 1, Seiten 343-374).

Der Erfindung liegt die Aufgabe zugrunde, die Nachteile der bekannten Verfahren zur Trocknung der Granulate zu vermeiden und insbesondere eine schonende und gute Trocknung – auch von Granulaten mit höhren Wassergehalt – mit möglichst geringem Aufwand zu erzielen.

Die Lösung dieser Aufgabe erfolgt erfindungsgemäß dadurch, daß die feuchten Granulien durch Berührung mit trockenem, warmem Endgas von Schwefelsäure-Kontaktanlagen mindestens teilweise getrocknet werden. Unter dem Ausdruck "Endgas" ist das Gas zu verstehen, das bei einer Normalkatalyse nach dem $SO_3$-Absorber anfällt und bei einer Doppelkatalyse nach dem $SO_3$-Endabsorber. Das Endgas enthält noch geringe Mengen an $SO_2$, $SO_3$ und eventuell Schwefelsäurenebel. Wenn die $SO_3$-Absorption mit kalter Schwefelsäure durchgeführt wird, hat das Endgas eine Temperatur von etwa 40-80°C. Wenn die Absorption als Heißabsorption mit heißer Schwefelsäure durchgeführt wird, hat das Endgas eine Temperatur von 80-200°C. Das Endgas ist praktisch wasserfrei. Eine Trocknung des Granulates in einem Drehrohr kann im Gegen- oder Gleichstrom erfolgen. Bei einer Gegenstromtrocknung wird das Endgas entweder mit der anfallenden Temperatur eingesetzt oder es wird auf eine Temperatur aufgeheizt, bei der mit Sicherheit keine Überhitzung des jeweiligen Granulates erfolgt. Da das Endgas wasserfrei ist, kann auch mit niedrigeren Temperaturen eine sehr gute Trocknung erzielt werden, im Vergleich zu einem Rauchgas, das den Wassergehalt der feuchten Luft und den bei der Verbrennung fossiler Brennstoffe entstehenden Wasserdampf enthält. Bei einer Trocknung im Gleichstrom wird das Endgas auf eine Temperatur aufgeheizt, bei der mit Sicherheit keine Schädigung des jeweiligen Granulats eintritt. Diese maximal zulässige Temperatur liegt höher als die beim Gegenstromverfahren, da durch die starke Wasserverdampfung aus dem feuchten Granulat ein starker Kühleffekt eintritt. Dieser Kühleffekt ist bei der Verwendung von trockenem Endgas noch stärker als bei der Verwendung von feuchtem Rauchgas, da die Wasserverdampfung verstärkt wird. Das Endgas kann auch in den Granulator eingesetzt werden. Dadurch wird, verglichen mit dem Einsatz von atmosphärischer Luft, die infolge der Neutralisationswärme erfolgende Wasserverdampfung beschleunigt, da der Wasserdampfpartialdruck im Gasraum über dem Material verringert wird. Wenn der Granulator gleichzeitig als Ammoniator betrieben wird, ist die Einleitung des Endgases im Gleichstrom zweckmäßig. Anderenfalls kann das Endgas auch im Gegenstrom eingeleitet werden. Bei gleicher Temperatur – verglichen mit einem Rauchgas – kann die Menge des eingesetzten Endgases bei gleicher Wasseraufnahme verringert werden, ohne daß eine Unterschreitung des Taupunktes eintritt. Der Einsatz des Endgases hat außerdem noch den zusätzlichen Vorteil, daß ein Teil seiner sauren Bestandteile von den Granulaten gebunden wird und damit der Schadstoffgehalt des Endgases ohne zusätzlichen Aufwand verringert wird. Da die Abgase des Granulators im allgemeinen durch eine Gaswäsche geleitet werden, wird dort noch ein weiterer Teil der sauren Bestandteile des Endgases entfernt, so daß praktisch ein schadstofffreies Abgas in die Atmosphäre abgegeben wird. Die in der Gaswäsche erforderliche Zugabe von Säuren zur Neutralisation bzw. Absorption von Ammoniak kann entsprechend dem aus den Endgasen abgeschiedenen Äquivalent an sauren Bestandteilen verringert werden. Auch bei einer mechanischen Staubabscheidung nach der Trocknung wird noch ein Teil der im Endgas enthaltenen sauren Bestandteile von dem feinen Staub gebunden. Die in Form von Sulfaten gebundenen sauren Bestandteile aus dem Endgas kommen dadurch letztlich dem Düngemittelprodukt zugute.

Eine vorzugsweise Ausgestaltung besteht darin, daß das Endgas vor der Berührng mit den feuchten Granalien durch überschüssige Wärme der Kontaktanlage aufgeheizt wird. Dadurch kann das Endgas ohne Verwendung von Primärenergie aufgeheizt werden und die auf relativ niedrigem Temperaturniveau anfallende überschüssige Wärme der Kontaktanlage vorteilhafte ausgenutzt werden.

Eine vorzugsweise Ausgestaltung besteht darin, daß die Aufheizung des Endgases bei einer Doppelkatalyse-Kontaktanlage durch überschüssige Gaswärme der $SO_3$-haltigen Gase vor deren Eintritt in die $SO_3$-Absorber erfolgt. Dadurch kann das Endgas auf eine Temperatur bis zu etwa 300°C aufgeheizt werden, wobei nur die Gaswärme der Doppelkatalyse-Kontaktanlage verwendet wird, die mit dem niedrigsten Temperaturniveau anfällt.

Eine vorzugsweise Ausgestaltung besteht darin, daß die Aufheizung des Endgases bei einer Normalkatalyse-Kontaktanlage durch überschüssige Gaswärme der $SO_3$ haltigen Gase vor deren Eintritt in den $SO_3$-Absorber und durch überschüssige Gaswärme der $SO_3$-haltigen Gase zwischen den letzten Kontakthorden erfolgt. Dadurch kann das Endgas auf eine Temperatur bis zu etwa 300°C aufgeheizt werden, wobei nur die Gaswärme der Normalkatalyse-Kontaktanlage verwendet wird, die mit dem niedrigsten Temperaturniveau anfällt.

Eine vorzugsweise Ausgestaltung besteht darin, daß trockenes Endgas sowohl bei der Trocknung als bei der Granulation eingesetzt wird. Ein Teilstrom des Endgases wird mit einer Temperatur von etwa 40-100°C in die Granulation eingesetzt und ein anderer Teilstrom in die Trocknung. Dadurch wird eine besonders gute Endfeuchte des Granulates mit geringem Aufwand erzielt.

Eine vorzugsweise Ausgestaltung besteht darin, daß die Endgase im Granulator im Gleichstrom zum Aufgabematerial geführt werden. Dadurch kann bei gleichzeitiger Funktion des Granulators als Ammoniator eine günstigere Ammoniakbindung und eine bessere Granulation erzielt werden.

Eine vorzugsweise Ausgestaltung besteht darin, daß die Endgase im Trockner im Gegenstrom zu den Granalien geführt werden. Dadurch wird eine besonders geringe Restfeuchte des Granulates erzielt.

Eine vorzugsweise Ausgestaltung besteht darin, daß die Granulation und die Trocknung in einem gemeinsamen Apparat durchgeführt werden. Dadurch kann der apparative Aufwand verringert werden.

Eine vorzugsweise Ausgestaltung besteht darin, daß die Trocknung im Gegenstrom und die Granulation im Gleichstrom zum Endgas erfolgt und die Endgase gemeinsam aus einem mittleren Teil des Apparates abgezogen und in die Gaswäsche geführt werden. Unter dem Ausdruck "einem mittleren Teil" ist die Stelle zu verstehen, wo die eigentliche Granulation in die Trocknung übergeht. Dadurch werden eine sehr niedrige Endfeuchte des Granulates mit geringem Aufwand erzielt, das gesamte Abgas gereinigt und gleichzeitig auch die sauren Bestandteile des gesamten Endgases in der Gaswäsche weitgehend entfernt.

Eine Ausgestaltung besteht darin, daß die Granulation und die Trocknung in einem Wirbelschichtapparat – unter Einsatz von Endgasen als Fluidisierungsgas und als Zerstäubungsgas für die Materialaufgabe – durchgeführt wird. Durch die gleichzeitige Verwendung des Endgases als Fluidisierungsgas und als Zerstäubungsgas wird eine weitgehende Trocknung bei vergleichsweise niedrigerer Temperatur als bei aufgeheizter atmosphärischer Luft erzielt.

Die Vorteile der Erfindung bestehen darin, daß eine schonende und trotzdem gute Trocknung mit relativ geringem Aufwand erreicht werden kann. Auch Granulate mit höherem Wassergehalt können auf diese Weise getrocknet werden. Das zur Trocknung verwendete Endgas steht praktisch kostenlos zur Verfügung und wird selbst noch von einem Teil seiner sauren Bestandteile befreit.

**Ansprüche**

1. Verfahren zur Trocknung von feuchten, granulierten, ammonium- oder alkalihaltigen Düngern mittels Gasen, dadurch gekennzeichnet, daß die feuchten Granalien durch Berührung mit trockenem, warmem Endgas von Schwefelsäure-Kontaktanlagen mindestens teilweise getrocknet werden.

2. Verfahren nach Anspruch 1, dadurch gekennzeichnet, daß das Endgas vor der Berührung mit den feuchten Granalien durch überschüssige Wärme der Kontaktanlage aufgeheizt wird.

3. Verfahren nach Anspruch 2, dadurch gekennzeichnet, daß die Aufheizung des Endgases bei einer Doppelkatalyse-Kontaktanlage durch überschüssige Gaswärme der $SO_3$-haltigen Gase vor deren Eintritt in die $SO_3$-Absorber erfolgt.

4. Verfahren nach Anspruch 2, dadurch gekennzeichnet, daß die Aufheizung des Endgases bei einer Normalkatalyse-Kontaktanlage durch überschüssige Gaswärme der $SO_3$-haltigen Gase vor deren Eintritt in den $SO_3$-Absorber und durch überschüssige Gaswärme der $SO_3$-haltigen Gase zwischen den letzten Kontakthorden erfolgt.

5. Verfahren nach einem der Ansprüche 1 bis 4, dadurch gekennzeichnet, daß trockenes Endgas sowohl bei der Trocknung als auch der Granulation eingesetzt wird.

6. Verfahren nach Anspruch 5, dadurch gekennzeichnet, daß die Endgase im Granulator im Gleichstrom zum Aufgabematerial geführt werden.

7. Verfahren nach einem der Ansprüche 1 bis 6, dadurch gekennzeichnet, daß die Endgase im Trockner im Gegenstrom zu den Granalien geführt werden.

8. Verfahren nach einem der Ansprüche 1 bis 5, dadurch gekennzeichnet, daß die Granulation und die Trocknung in einem gemeinsamen Apparat durchgeführt werden.

9. Verfahren nach Anspruch 8, dadurch gekennzeichnet, daß die Trocknung im Gegenstrom und die Granulation im Gleichstrom zum Endgas erfolgt und die Endgase gemeinsam aus einem mittleren Teil des Apparates abgezogen und in die Gaswäsche geführt werden.

10. Verfahren nach einem der Ansprüche 1 bis 8, dadurch gekennzeichnet, daß die Granulation und die Trocknung in einem Wirbelschichtapparat – unter Einsatz von Endgasen als Fluidisierungsgas und als Zerstäubungsgas für die Materialaufgabe – durchgeführt wird.

**Claims**

1. A process of drying moist, granular fertilizers which contain ammonium or alkali, by means of gases, characterized in that the moist granules are at least partly dried in contact with dry warm end gas from contact process plants for producing sulfuric acid.

2. A process according to claim 1, characterized in that the end gas is heated up by surolus heat from the contact process plant before the end gas is contacted with the moist granules.

3. A process according to claim 2, characterized in that the end gas from a double-catalysis contact process plant is heated up by surplus gas heat of the $SO_3$-containing gases before they enter the $SO_3$ absorbers.

4. A process according to claim 2, characterized in that the end gas from a normal-catalysis contact process plant is heated up by surplus gas heat of the $SO_3$-containing gases before they enter the $SO_3$ absorber and by surplus gas heat of the $SO_3$-containing gases between the last contacting trays.

5. A process according to any of claims 1 to 4, characterized in that dry end gas is used for drying and for granulating.

6. A process according to claim 5, characterized in that the end gases are cocurrently conducted in the granulator relative to the feed.

7. A process according to any of claims 1 to 6, characterized in that the end gases are cocurrently conducted in the dryer relative to the granules.

8. A process according to any of claims 1 to 5, characterized in that granulating and drying are effected in a common apparatus.

9. A process according to claim 8, characterized in that drying is effected in a countercurrent operation and granulating in a cocurrent operation relative to the end gas and the end oases are jointly withdrawn from an intermediate part of the apparatus and then fed to the gas scrubber.

10. A process according to any of claims 1 to 8, characterized in that granulating and drying are effected in a fluidized bed apparatus, in which end gases are used as a fluidizing gas and as a gas for atomizing material as it is fed.

**Revendications**

1. Procédé de séchage d'engrais humides granulés contenant de l'ammonium ou des métaux alcalins au moyen de gaz, caractérisé en ce qu'il consiste à sécher, au moins partiellement, les granulés humides par contact avec du gaz final sec et chaud d'installations de fabrication d'acide sulfurique par contact.

2. Procédé suivant la revendication 1, caractérisé en ce qu'il consiste à chauffer le gaz final, avant le contact avec les granulés humides, par de la chaleur en excès de l'installation de contact.

3. Procédé suivant la revendication 2, caractérisé en ce qu'il consiste à effectuer le chauffage du gaz final, dans une installation de contact à catalyse double, par la chaleur en excès des gaz contenant du $SO_3$ avant leur entrée dans l'absorbeur de $SO_3$.

4. Procédé suivant la revendication 2, caractérisé en ce qu'il consiste à effectuer le chauffage du gaz final, dans une installation de contact à catalyse normale, par la chaleur en excès des gaz contenant du $SO_3$ avant leur entrée dans l'absorbeur de $SO_3$ et par la chaleur en excès des gaz contenant du $SO_3$ entre les deux grilles de contact.

5. Procédé suivant l'une des revendications 1 à 4, caractérisé en ce qu'il consiste à utiliser le gaz final sec à la fois pour le séchage et pour la granulation.

6. Procédé suivant la revendication 5, caractérisé en ce qu'il consiste à envoyer le gaz final dans le granulateur en courant de même sens que la matière chargée.

7. Procédé suivant l'une des revendications 1 à 6, caractérisé en ce qu'il consiste à envoyer le gaz final dans le séchoir à contre-courant des granulés.

8. Procédé suivant l'une des revendications 1 à 5, caractérisé en ce qu'il consiste à effectuer la granulation et le séchage dans un appareil commun.

9. Procédé suivant la revendication 8, caractérisé en ce qu'il consiste à effectuer le séchage à contre-courant et la granulation en courant de. même sens par rapport au gaz final et à soutirer le gaz final en commun d'une partie intermédiaire de l'appareil et à l'envoyer au lavage du gaz.

10. Procédé suivant l'une des revendications 1 à 8, caractérisé en ce qu'il consiste à effectuer la granulation et le séchage dans un appareil à lit fluidisé en utilisant du gaz final comme gaz de fluidisation et comme gaz de pulvérisation de la matière à charger.